# EUROPÄISCHE PATENTSCHRIFT

(11) **EP 0 825 367 B1**
(45) Veröffentlichungstag und Bekanntmachung des Hinweises auf die Patenterteilung: **11.10.2000**
(21) Anmeldenummer: 97111989.6
(22) Anmeldetag: 15.07.1997
(51) Int. Cl.: F16H 61/26

(54) **Betätigungseinrichtung für ein Kraftfahrzeuggetriebe**
Actuating mechanis for automatic transmission
Dispositif d'actionnement pour transmission véhiculaire

(30) Priorität: 14.08.1996 DE 19632859
(43) Veröffentlichungstag der Anmeldung: 25.02.1998
(73) Patentinhaber: Bayerische Motoren Werke Aktiengesellschaft, 80788 München (DE)
(72) Erfinder: Gouselis, Michael, 86507 Kleinaitingen (DE)

(56) Entgegenhaltungen:
- DE-A- 2 658 274
- DE-A- 2 743 875
- DE-A- 3 237 953
- DE-C- 3 808 747

## Beschreibung

Die Erfindung betrifft eine Betätigungseinrichtung für ein Kraftfahrzeuggetriebe nach dem Oberbegriff des Hauptanspruchs.

Die DE 26 58 274 B2 beschreibt eine Lagerung für einen Handschalthebel für ein Wechselgetriebe von Fahrzeugen, bei der der Handschalthebel über ein Bewegungsgetriebe mit einer Stützstange und einer Schaltstange mit dem Wechselgetriebe in Verbindung steht. Der Handschalthebel ist über ein Kugelgelenk und weiteren Gestängegliedern in Schaltrichtung und Wählrichtung beweglich sowohl mit dem Fahrzeugboden, als auch mit der Stützstange verbunden. Die Lagerung für den Handschalthebel hat die Aufgabe, Vibrationen des Getriebes wirksam vor dem Handschalthebel abzufangen, bei kompaktem Aufbau der Aufhängungs- und Lagerungsglieder.

Nachteilig kann sich eine solche Lagerung jedoch auswirken, wenn Kraftfahrzeuggetriebe und Handschalthebel zum Beispiel eine ungünstige Lage zur Sitzposition des Fahrers haben. Da Bewegungen des Kraftfahrzeuggetriebes über das Bewegungsgetriebe auf den Handschalthebel übertragen werden, bewegt sich dieser mit unterschiedlichen Amplituden, je nachdem wie lang er ist. Dies kann das Schaltgefühl für den Fahrer verschlechtern und den Fahrkomfort beeinflussen.

Deshalb ist es Aufgabe der Erfindung, eine Betätigungseinrichtung für ein Kraftfahrzeuggetriebe zu schaffen, bei der das Bewegungsgetriebe zum Kraftfahrzeuggetriebe so gestaltet ist, daß der Schalthebel seine Lage beibehält, während sich das Kraftfahrzeuggetriebe in beliebiger Richtung im Raum bewegen kann.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist der Schalthebel mindestens in Schalt- und Wählrichtung beweglich an einem karosseriefesten Fahrzeugteil angebracht und das Bewegungsgetriebe zum Kraftfahrzeuggetriebe besteht, gesehen in der Projektion auf die Schaltebene, aus mindestens einer Parallelogrammführung aus vier Stäben, wobei ein Stab fest mit dem Schalthebel verbunden ist und bei einer Schalt- und/oder Wählbewegung des Schalthebels drei Stäbe in ihrer Lage verändert werden und ein Stab seine Lage beibehält. Dieser Stab ist an seinem einen Ende in der Schaltebene schwenkbeweglich an einem karosseriefesten Fahrzeugteil angebracht und an seinem anderen Ende mit dem Kraftfahrzeuggetriebegehäuse über mindestens so viele Freiheitsgrade beweglich verbunden, daß jede räumliche Bewegung des Kraftfahrzeuggetriebegehäuses möglich ist, ohne Reaktionskräfte im Bewegungsgetriebe hervorzurufen. Bei einer räumlichen Bewegung des Kraftfahrzeuggetriebegehäuses behält dann der Stab seine Lage bei, der fest mit dem Schalthebel verbunden ist und die anderen drei Stäbe werden in ihrer Lage verändert.

Eine solche Betätigungseinrichtung für ein Kraftfahrzeuggetriebe hat den Vorteil, daß der Schalthebel irgendwo an der Karosserie eines Fahrzeugs angebracht werden kann. Dadurch ist seine Länge unabhängig von der Sitzposition des Fahrers, auch wenn diese zum Beispiel einen größeren Höhenabstand zum Getriebe hat, wie zum Beispiel bei Vans oder Lastkraftwagen. Ein relativ kurzer Schalthebel kann so in der Nähe des Fahrers angebracht werden und bei seiner Betätigung überträgt das Bewegungsgetriebe die Bewegungen mit den bei der Konstruktion ausgewählten Übersetzungen in Wähl- und Schaltrichtung zum Kraftfahrzeuggetriebe. Dabei ist der Schalthebel schwingungsfrei gelagert und von allen räumlichen Bewegungen und Vibrationen des Antriebsstranges relativ zur Karosserie entkoppelt. Selbst bei einem sehr langen Schalthebel findet bei einer Bewegung des Fahrzeuggetriebes relativ zur Karosserie keine Bewegung des Schaltknaufs des Schalthebels mehr statt.

Bei bevorzugten Ausführungen der Betätigungseinrichtung sind die drei Stäbe der Parallelogrammführung, die bei einer Schalt- und/oder Wählbewegung des Schalthebels in ihrer Lage verändert werden, gesehen in einer Projektion auf die Schaltebene, der Schalthebel, zwischen Schaltachse und einem ersten Verbindungsgelenk zu einem Koppelelement, das Koppelelement, zwischen dem ersten Verbindungsgelenk und einem zweiten Verbindungsgelenk zu einem Verbindungselement und das Verbindungselement, zwischen dem zweiten Verbindungsgelenk und einem dritten Verbindungsgelenk zu einem vierten Stab, dem Halteelement. Dabei wird der Stab der Parallelogrammführung, der bei einer Schalt- und/oder Wählbewegung des Schalthebels seine Lage beibehält, vom vierten Stab, zwischen dem dritten Verbindungsgelenk und der Drehachse des Schalthebels in Schaltrichtung gebildet. Der vierte Stab ist an seinem einen Ende um eine Befestigungsachse schwenkbar an einem karosseriefesten Fahrzeugteil angelenkt und an seinem anderen Ende in alle Richtungen drehbar am Verbindungselement angebracht, wobei die Drehachse des Schalthebels in Schaltrichtung und die Befestigungsachse bei in Wählrichtung nicht ausgelenktem Schalthebel koaxial verlaufen. Desweiteren wird vom anderen Ende des vierten Stabes durch eine Stützstange die Verbindung zum Kraftfahrzeuggetriebegehäuse hergestellt.

Vorteilhafterweise besteht das Verbindungselement aus einem Winkelhebel, dessen Ende eines ersten Schenkels mit einer Schaltstange schwenkbeweglich verbunden ist und dessen Ende eines zweiten Schenkels mit dem Koppelelement beweglich so verbunden ist, daß sowohl die Wählbewegung, als auch die Schaltbewegung des Schalthebels über das Koppelelement und den Winkelhebel auf die Schaltstange übertragen wird. Dabei ist der Winkelhebel in einer besonders günstigen Ausführung der Erfindung über ein Kugelgelenk am Halteelement angebracht.

Die Stützstange zum Kraftfahrzeuggetriebegehäuse ist in einer besonders einfachen Ausführung am vierten Stab schwenkbar angebracht, wobei die Schwenkachse durch den Mittelpunkt des Kugelgelenkes verläuft. Dabei besteht der vierte Stab als Halteelement aus zwei Halteelementteilen, die durch ein Gelenk so verbunden sind, daß sie um die Längsachse des Halteelements gegeneinander verdrehbar sind.

Das Koppelelement ist bei einer weiteren bevorzugten Ausführung der Erfindung einfach auszuführen, wenn es aus zwei Koppelstangen besteht, die mit dem Schalthebel und dem Verbindungselement ein Viergelenkgetriebe in einer Ebene senkrecht zur Schaltebene bilden, wobei mindestens zwei Glieder des Viergelenkgetriebes, der Schalthebel und das Verbindungselement, parallel zueinander geführt werden. Über die Länge der zwei Koppelstangen kann vorteilhafterweise die Übersetzung des Bewegungsgetriebes in Wählrichtung beeinflußt werden. Sie kann gleich, größer oder kleiner wie die Übersetzung in Schaltrichtung gewählt werden, ist also von dieser unabhängig. Dabei verläuft der vierte Stab, das Halteelement, parallel zur Ebene des Viergelenkgetriebes.

Ein bevorzugtes Ausführungsbeispiel der Erfindung ist in der nachfolgenden Beschreibung mit der zugehörigen Zeichnung dargestellt. Es zeigen
- Figur 1: eine perspektivische Gesamtansicht einer Betätigungseinrichtung für ein Kraftfahrzeuggetriebe,
- Figur 2: die Betätigungseinrichtung aus Figur 1, seitenverkehrt dargestellt als kinematisches Modell,
- Figur 3: das kinematische Modell aus Figur 2, projeziert auf die Schaltebene, wobei zwei verschiedene Stellungen des Bewegungsgetriebes (durchgezogen und gestrichelt) dessen Wirkungsweise zeigen, bei einer Verschiebung des Kraftfahrzeuggetriebes in X-Richtung,
- Figur 4: eine Darstellung gemäß Figur 3, allerdings für eine Auslenkung des Kraftfahrzeuggetriebes in Z-Richtung.

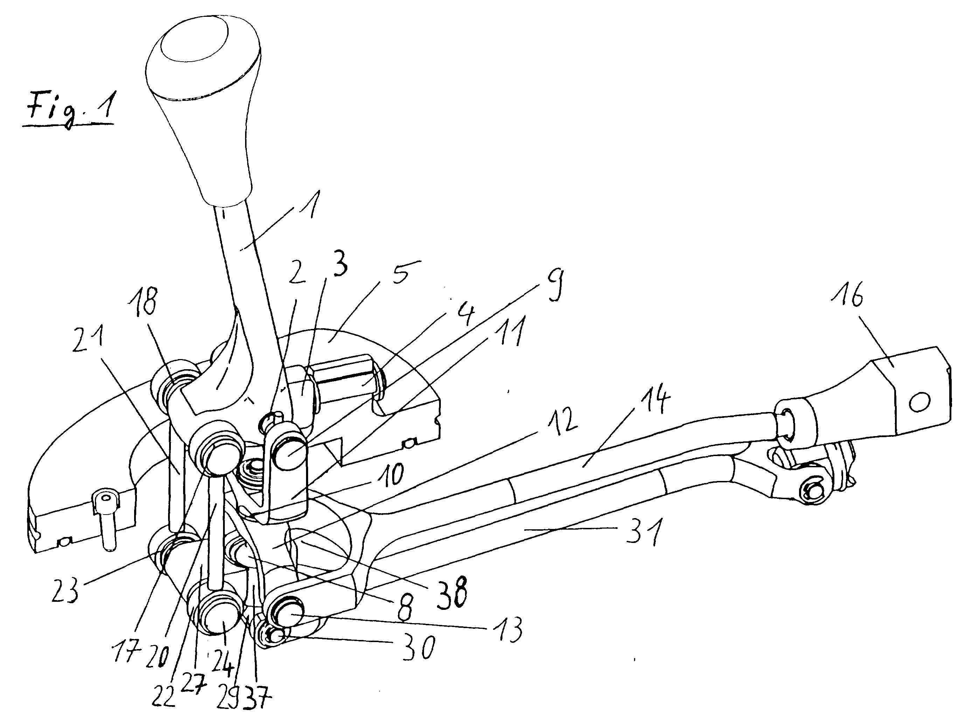

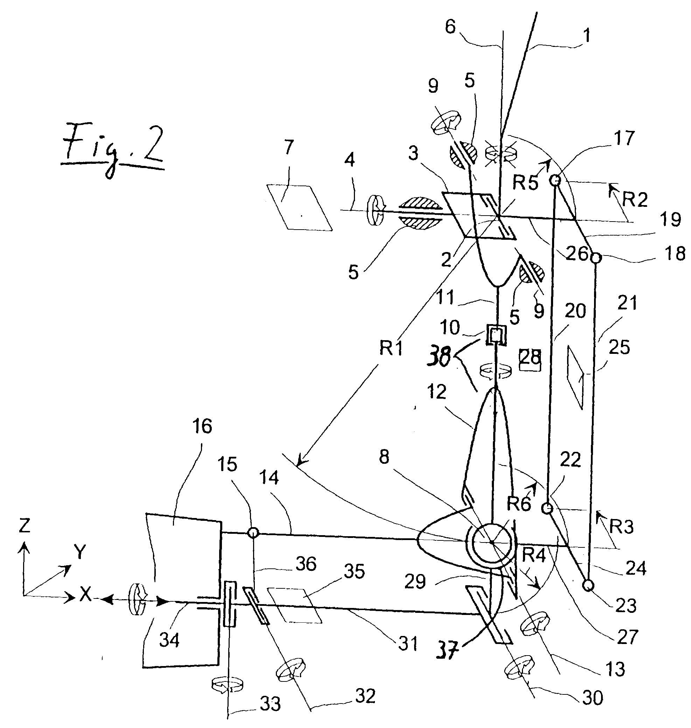

In Figur 1, einer konstruktiven Umsetzung des kinematischen Modells aus Figur 2, werden zuerst die einzelnen Bauteile der Betätigungseinrichtung für ein Kraftfahrzeuggetriebe erläutert. Der kinematische Zusammenhang und die Funktion der einzelnen Bauteile wird dann in der Beschreibung zu Figur 2 dargestellt.

In Figur 1 ist mit 1 ein Schalthebel bezeichnet, der karosseriefest an einer Konsole 5 über eine Schaltachsenaufnahme 3 um eine Schaltachse 2 und eine Wählachse 4 schwenkbar angebracht ist. Beim Schwenken des Schalthebels 1 wird durch diesen ein Koppelelement betätigt, das aus zwei Koppelstangen 20, 21 besteht, die über erste Kugelgelenke 17, 18 mit dem Schalthebel 1 verbunden sind. Dabei verläuft eine erste Achse 19 (Figur 2), die die ersten Kugelgelenke 17 und 18 verbindet, parallel zur Schaltachse 2. Die Koppelstangen 20, 21 sind wiederum über zweite Kugelgelenke 22, 23 an einem als Winkelhebel 37 ausgebildeten Verbindungselement befestigt. Das Koppelelement ist so gestaltet, daß die erste Achse 19 (Figur 2) parallel zu einer zweiten Achse 24, der Verbindungsachse der zweiten Kugelgelenke 22, 23, geführt wird.

Das als Winkelhebel 37 ausgeführte Verbindungselement ist über ein drittes Kugelgelenk 8 an einem Halteelement 38 bewegbar befestigt und trägt am Ende eines ersten Schenkels 29 um eine dritte Achse 30 schwenkbar gelagert eine Schaltstange 31. Die Schaltstange 31 ist die die Schaltbewegung ausführende Verbindung zu einer in dieser Figur nicht gezeichneten Getriebesteuerwelle 34 (Figur 2) des nicht gezeichneten Kraftfahrzeuggetriebes. Die zweite Achse 24 und die dritte Achse 30 sind parallel zueinander.

Das Halteelement 38, an dessen unterem Halteelementteil 12 der Winkelhebel 37 über das dritte Kugelgelenk 8 angebracht ist, ist mit einem oberen Halteelementteil 11 an seinem einen Ende um eine Befestigungsachse 9 schwenkbar an der Konsole 5 angebracht. Die Schaltachse 2 und die Befestigungsachse 9 verlaufen bei in Wählrichtung nicht ausgelenktem Schalthebel 1 koaxial, sind aber bei einer Bewegung des Schalthebels 1 in Wählrichtung voneinander entkoppelt. Beide Halteelementteile 11, 12 sind durch ein Gelenk 10 so miteinander verbunden, daß sie um eine gemeinsame Längsachse der Halteelementteile 11, 12 gegeneinander verdrehbar sind. An einem anderen Ende des Halteelements 38 ist zusätzlich zu der Verbindung zum Winkelhebel 37 durch eine Stützstange 14 eine schwenkbewegliche Verbindung zu einem nur angedeutet gezeichneten Kraftfahrzeuggetriebegehäuse 16 hergestellt.

Das kinematische Funktionsmodell in Figur 2 zeigt klarer wie die Darstellung in Figur 1, daß über die Wählachse 4 die Schaltachsenaufnahme 3 schwenkbeweglich an einer karosseriefesten Konsole 5 gelagert ist. Der Schalthebel 1 kann in Schaltrichtung um die Schaltachse 2 betätigt werden. Die Schaltachse 2 ist in der Schaltachsenaufnahme 3 gelagert. Mit dieser kann er um die Wählachse 4 verschwenkt werden. In Wählrichtung werden Schalthebel 1 und Schaltachsenaufnahme 3 gemeinsam um die Wählachse 4 gedreht. Der Schalthebel 1 besitzt zwei Freiheitsgrade, Schaltachse 2 und Wählachse 4 stehen aufeinander senkrecht und befinden sich auf einer gemeinsamen Ebene 7.

Allerdings wäre es auch denkbar, den Schalthebel 1 in einer anderen Ausführungsform der Erfindung in der Ebene 7 über ein Kugelgelenk in der Konsole 5 zu lagern.

Die Bewegung des Schalthebels 1 wird zum Schalten zwischen Getriebeübersetzungen über ein Bewegungsgetriebe auf die Getriebesteuerwelle 34 übertragen. Das Bewegungsgetriebe besteht, in einer Projektion auf eine Schaltebene 28 gesehen, aus mindestens einer Parallelogrammführung aus vier Stäben, wobei ein erster Stab 26 vom Schalthebel 1, ein zweiter Stab vom Koppelelement und ein dritter Stab vom Verbindungselement gebildet werden. Den vierten Stab der Parallelogrammführung bildet das Halteelement 38, das bei einer Schalt- und/oder Wählbewegung des Schalthebels 1 seine Lage beibehält.

Es ist deutlich erkennbar, daß das Halteelement 38 mit seinem einen Ende über die Befestigungsachse 9 in der Konsole 5 schwenkbar gelagert ist. Die Schaltachse 2 und die Befestigungsachse 9 stehen koaxial zueinander, wenn sich der Schalthebel 1 auf seiner gezeichneten neutralen Stelle befindet. Das dritte Kugelgelenk 8 kann wie ein Pendel um die Befestigungsachse 9 mit dem konstanten Radius R1 rotieren. Sein Abstand zur Befestigungsachse 9 ist nicht veränderlich. Das Halteelement 38 ist in zwei Teile geteilt. Das untere Halteelementteil 12 mit dem dritten Kugelgelenk 8 kann aufgrund des Gelenks 10 zusätzlich um die Längsachse des Halteelements 38 relativ zum oberen Halteelementteil 11 rotieren. Das dritte Kugelgelenk 8 selbst hat drei Freiheitsgrade.

In dem unteren Halteelementteil 12 ist die Schwenkachse 13 gelagert. Um diese Schwenkachse 13 kann sich die Stützstange 14 drehen. Die Schwenkachse 13 geht durch den Mittelpunkt des dritten Kugelgelenks 8 und ist parallel zur gemeinsamen Ebene 7 von Schaltachse 2 und Wählachse 4. In der Einbaulage, wenn sich der Schalthebel 1 auf seiner neutralen Stelle befindet, ist die Schwenkachse 13 zusätzlich parallel zur Befestigungsachse 9, im Betrieb kann sie aber mit dem unteren Halteelementteil 12 aufgrund des Gelenks 10 um die Längsachse des Halteelementes 38 drehen.

Die Stützstange 14 ist an ihrem getriebeseitigen Ende durch ein viertes Kugelgelenk 15 am Kraftfahrzeuggetriebegehäuse 16 befestigt. Der Abstand des dritten Kugelgelenks 8 zum vierten Kugelgelenk 15 und damit auch zum Kraftfahrzeuggetriebegehäuse 16 ist somit festgelegt. Das vierte Kugelgelenk 15 selbst hat drei Freiheitsgrade, so daß die Stützstange 14 nur Druck- und Zugkräfte und keine Drehmomente aufnehmen kann. So ist das Halteelement 38 an seinem anderen Ende mit dem Kraftfahrzeuggetriebegehäuse 16 über mindestens so viele Freiheitsgrade beweglich verbunden, daß jede räumliche Bewegung des Kraftfahrzeuggetriebegehäuses (16) möglich ist, ohne Reaktionskräfte im Bewegungsgetriebe hervorzurufen, wobei der erste Stab 26 seine Lage beibehält, und die anderen drei Stäbe, Halteelement 38, zweiter Schenkel 27 und Koppelelement, in ihrer Lage verändert werden.

Die ersten Kugelgelenke 17, 18, als erstes Verbindungsgelenk der Parallelogrammführung, sind am Schalthebel 1 befestigt und deren Verbindungsachse, die erste Achse 19, ist parallel zur Schaltachse 2. Das Koppelelement aus den Koppelstangen 20, 21 ist über die ersten Kugelgelenke 17, 18 an der ersten Achse 19 befestigt. Die ersten Kugelgelenke 17, 18 haben drei Freiheitsgrade.

Am anderen Ende der Koppelstangen 20, 21 sind diese über zweite Kugelgelenke 22, 23, als zweitem Verbindungsgelenk der Parallelogrammführung, mit der zweiten Achse 24, die parallel zur ersten Achse 19 verläuft, verbunden. Die beiden Koppelstangen 20, 21 können parallel zueinander sein. Dies ist jedoch nicht Bedingung. Sind die beiden Koppelstangen 20, 21 parallel, bilden sie mit dem Schalthebel 1 und dem Winkelhebel 37 eine weitere Parallelogrammführung in einer Ebene 25, senkrecht zur Schaltebene 28. Liegen die Koppelstangen 20, 21 dagegen nicht parallel, so spannen die ersten Kugelgelenke 17,18 mit den zweiten Kugelgelenken 22,23 ein trapezförmiges Viergelenkgetriebe in der selben Ebene 25 auf, in der auch die weitere Parallelogrammführung bei gleich großen Radien R2 und R3 liegt. Durch verschiedene Längen der Radien R2 und R3 wird eine Übersetzung des Bewegungsgetriebes für die Weiterleitung der Bewegung des Schalthebels 1 um die Wählachse 4 bestimmt. Diese Wählübersetzung wird desweiteren noch beeinflußt von der Länge R4 des ersten Schenkels 29 des Winkelhebels 37 und der Länge des Schalthebels 1. Für die Wählübersetzung gilt dann folgende Beziehung:
I = (R3 • L1)/(R2 • R4) für R 3 = R2 ist dann I = L1 / R4
Dabei ist L1 die Länge des Schalthebels 1.

Der erste Stab 26 der Parallelogrammführung verbindet die erste Achse 19 mit der Schaltachse 2 des Schalthebels 1. Der zweite Schenkel 27 des Verbindungselements, als dritter Stab der Parallelogrammführung, verbindet die zweite Achse 24 mit dem dritten Verbindungsgelenk, dem Kugelgelenk 8. Der erste Stab 26 ist parallel zum dritten Stab und senkrecht zur ersten Achse 19. Der dritte Stab ist ebenfalls senkrecht zur zweiten Achse 24. Das Halteelement 38, als vierter Stab der Parallelogrammführung, das die Schaltachse 2 mit dem dritten Kugelgelenk 8 verbindet, ist parallel zur Ebene 25 des Viergelenkgetriebes bzw. der weiteren Parallelogrammführung. Der erste Stab 26, das Halteelement 38 und der dritte Stab befinden sich auf der mit 28 bezeichneten Schaltebene, die senkrecht zur Ebene 25 des Viergelenkgetriebes steht, und bilden mit dem Koppelelement ein Parallelogramm. Der Abstand des ersten Stabes 26 von den ersten Kugelgelenken 17, 18 ist gleich groß. Der Abstand des dritten Stabes von den zweiten Kugelgelenken 22, 23 ist ebenfalls gleich groß. Der dritte Stab entspricht dem zweiten Schenkel 27 des Winkelhebels 37 und ist mit dem ersten Schenkel 29 des Winkelhebels 37 starr verbunden. Ihr Schnittpunkt ist der Mittelpunkt des dritten Kugelgelenks 8.

Die dritte Achse 30 ist senkrecht zum ersten Schenkel 29 des Winkelhebels 37. Die Schaltstange 31 ist senkrecht zur dritten Achse 30. Die Schaltstange 31 muß nur dann senkrecht zum ersten Schenkel 29 des Winkelhebels 37 sein, wenn sich der Schalthebel 1 in seiner Einbaulage befindet. Durch Gelenke mit den Achsen 32 und 33, die senkrecht zueinander und starr miteinander verbunden sind, wird dargestellt, daß die Schaltstange 31 auf die Getriebesteuerwelle 34 Kräfte nur in X-Richtung und Drehmomente nur in um die X-Achse ausüben kann. Die Getriebesteuerwelle 34 hat also zwei Freiheitsgrade.

Bei einer Bewegung des Schalthebels 1 um die Wählachse 4 dreht sich dieser zuammen mit der Schaltachsenaufnahme 3. Das hat zur Folge, daß die erste Achse 19 durch den ersten Stab 26 ebenfalls um die Wählachse gedreht wird. Die ersten Kugelgelenke 17, 18 drehen um die Wählachse 4 mit dem Radius R2, der der halben Länge der ersten Achse 19 entspricht. Die Koppelstangen 20 und 21 setzen diese Drehbewegung in geradlinige Bewegung um. Die zweiten Kugelgelenke 22, 23 bewegen sich dabei auf dem Kreis mit dem Radius R3, der der halben Länge der zweiten Achse 24 entspricht. Da der dritte Stab, der erste Schenkel 29 und die dritte Achse 30 durch den Winkelhebel 37 gebildet werden und deshalb starr miteinander verbunden sind, drehen sich diese um das dritte Kugelgelenk 8. Der Drehradius der dritten Achse 30 ist R4. Durch diese Drehbewegung wird die Getriebesteuerwelle 34 über die Schaltstange 31 und die Achsen 32 und 33 gedreht, bis der entsprechende Gang gewählt wird. Die Reaktionskräfte des Wählvorgangs werden durch das Halteelement 38 auf die Befestigungsachse 9 und damit über die Konsole 5 auf ein fahrzeugfestes Teil, zum Beispiel das Bodenblech des Fahrzeugs, übertragen.

Bei einer Bewegung des Schalthebels 1 in Schaltrichtung wird dieser um die Schaltachse 2 gedreht. Die erste Achse 19, durch den ersten Stab 26, dreht ebenfalls um die Schaltachse 2 mit dem Radius R5. Die Koppelstangen 20, 21 setzen diese Drehbewegung in geradlinige Bewegung um. Die zweite Achse 24, durch den dritten Stab, dreht um das dritte Kugelgelenk 8 mit dem Radius R6. Die dritte Achse 30 dreht um das dritte Kugelgelenk 8 mit dem Radius R4. Durch diese Drehbewegung wird die Getriebesteuerwelle 34 in geradlinige Bewegung versetzt und schaltet den entsprechenden Gang. Die Schaltstange 31 und die Achsen 32, 33 übertragen als Zwischenelement diese Bewegung. Die Stützstange 14 übernimmt einen Teil der Reaktionskräfte beim Schaltvorgang und stützt sich dabei am Kraftfahrzeuggetriebegehäuse 16 ab. Einen Teil der Reaktionskräfte überträgt das Halteelement 38 auf die Befestigungsachse 9 und damit über die Konsole 5 auf ein fahrzeugfestes Teil, zum Beispiel das Bodenblech des Fahrzeugs. Die Radien R5 und R6 müssen gleich groß sein. Dabei ist die Schaltübersetzung i = L1 / R4.

Beim Vergleich der Wählübersetzung l mit der Schaltübersetzung i ergibt sich, daß beim Wählen und Schalten konstruktiv zwei unterschiedliche Übersetzungen gewählt werden können. Nur dann, wenn R3 gleich R2 gewählt wird, sind Wählübersetzung I und Schaltübersetzung i gleich groß.

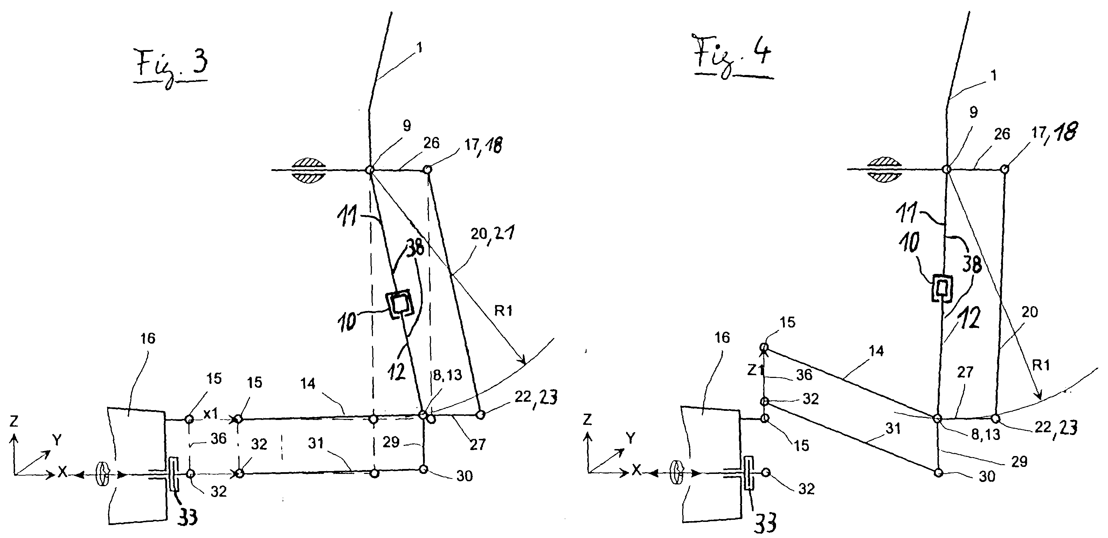

Die Figuren 3 und 4 zeigen die Funktion des Bewegungsgetriebes der Betätigungseinrichtung am Beispiel der Bewegung des Kraftfahrzeuggetriebegehäuses 16. Für Schwingungen des Antriebsstanges gilt entsprechendes. Bei allen Fahrzuständen, insbesondere beim Fahren auf unebenen Straßen, Start - Stop des Motors, Lastwechseländerungen am Antriebsstrang und hohen Motordrehzahlen führt der Motor mit dem Getriebe gemeinsam eine dreidimensionale Bewegung in seine drei Achsen, Längsachse X, Querachse Y und Hochachse Z, sowie eine rotatorische Bewegung um jede dieser drei Achsen aus. Diese relativen Bewegungen des Antriebsstranges zur Karosserie übertragen sich aufgrund des Bewegungsgetriebes nicht auf den Schalthebel 1, wie in Figur 3 am Beispiel einer Bewegung des Kraftfahrzeuggetriebegehäuses 16 entlang der X-Achse dargestellt ist:

Bewegt sich das Kraftfahrzeuggetriebegehäuse 16 entlang der X-Achse um den Betrag x1, dann wird das vierte Kugelgelenk 15 und die Achse 32 um den gleichen Betrag in die entsprechende Richtung bewegt. Das Halteelement 38 wird durch die Stützstange 14 und die Schaltstange 31 in Bewegung gesetzt und rotiert um die Befestigungsachse 9 mit dem Radius R1. Bei dieser Rotation bleibt der dritte Stab weiterhin parallel zum ersten Stab 26 und das Halteelement 38 parallel zur nicht sichtbaren Ebene 25 des Viergelenkgetriebes mit den Koppelstangen 20 und 21.

Eine Rotationsbewegung der entsprechenden Bauteile findet um die ersten 17, 18 und zweiten 22, 23 Kugelgelenke und das dritte Kugelgelenk 8 statt, mit der Befestigungsachse 9, der Schwenkachse 13, der dritten Achse 30 und den Achsen 32, 33 als Drehachsen. Der Schalthebel 1 bleibt dabei unbeweglich.

Eine Verschiebung des Kraftfahrzeuggetriebegehäuses 16 entlang der Y-Achse leitet eine Rotation des unteren Halteelementteils 12 um das Gelenk 10 ein. Das obere Halteelementteil 11 rotiert dabei nicht. Gleichzeitig wird das Halteelement 38 axial nach vorne gezogen, so daß es um die Befestigungsachse 9 mit dem Radius R1 dreht. Eine Rotation der entsprechenden Bauteile findet um die ersten 17, 18 und zweiten 22, 23 Kugelgelenke, desweiteren um das dritte 8 und vierte 15 Kugelgelenk statt. Dabei drehen sich die entsprechenden Bauteile um die Befestigungsachse 9, die Schwenkachse 13, die dritte Achse 30 und die Achsen 32 und 33. Der Schalthebel 1 bleibt dabei unbeweglich.

In Figur 4 wird in entsprechender Weise eine Bewegung des Kraftfahrzeuggetriebegehäuses 16 entlang der Z-Achse dargestellt.

Die Verschiebung des Kraftfahrzeuggetriebegehäuses 16 entlang der Z-Achse leitet eine Rotation des Halteelements 38 um die Befestigungsachse 9 mit dem Radius R1 ein. Gleichzeitig wird das Halteelement 38 axial nach vorne gezogen. Eine Rotation der entsprechenden Bauteile findet um die ersten 17, 18 und zweiten 22, 23 Kugelgelenke und um das dritte 8 und vierte 15 Kugelgelenk statt. Dabei drehen sich die entsprechenden Bauteile um die Befestigungsachse 9, die Schwenkachse 13, die dritte Achse 30 und die Achsen 32 und 33. Der Schalthebel 1 bleibt dabei wiederum unbeweglich.

## Patentansprüche

1. Betätigungseinrichtung für ein Kraftfahrzeuggetriebe mit einem Schalthebel (1), der zum Schalten zwischen Getriebeübersetzungen beweglich an einem Kraftfahrzeug angebracht ist, insbesondere in jeweils einer Schaltgasse um eine Schaltachse (2) im wesentlichen in Fahrzeuglängsrichtung schwenkbar und zum Wählen zwischen verschiedenen Schaltgassen in mindestens einer Wählgasse um eine Wählachse (4) im wesentlichen in Fahrzeugquerrichtung schwenkbar, und der über ein Bewegungsgetriebe mit mindestens einer Getriebesteuerwelle (34) des Kraftfahrzeuggetriebes verbunden ist, wobei ein Kraftfahrzeuggetriebegehäuse (16) an dem Bewegungsgetriebe angelenkt ist, dadurch gekennzeichnet, daß der Schalthebel (1) an einem karosseriefesten Fahrzeugteil angebracht ist und das Bewegungsgetriebe in einer Projektion auf eine Schaltebene (28) aus mindestens einer Parallelogrammführung aus vier Stäben besteht, wobei ein Stab fest mit dem Schalthebel (1) verbunden ist, und bei einer Schalt- und/oder Wählbewegung des Schalthebels (1) drei Stäbe in ihrer Lage verändert werden und ein Stab seine Lage beibehält, der an seinem einen Ende in der Schaltebene (28) schwenkbeweglich an einem karosseriefesten Fahrzeugteil angebracht ist und an seinem anderen Ende mit dem Kraftfahrzeuggetriebegehäuse (16) über mindestens so viele Freiheitsgrade beweglich verbunden ist, daß jede räumliche Bewegung des Kraftfahrzeuggetriebegehäuses (16) möglich ist, ohne Reaktionskräfte im Bewegungsgetriebe hervorzurufen, wobei der Stab seine Lage beibehält, der fest mit dem Schalthebel (1) verbunden ist und die anderen drei Stäbe in ihrer Lage verändert werden.

2. Betätigungseinrichtung nach Anspruch 1, dadurch gekennzeichnet, daß die drei Stäbe der Parallelogrammführung, die bei einer Schalt- und/oder Wählbewegung des Schalthebels (1) in ihrer Lage verändert werden, in einer Projektion auf die Schaltebene (28) aus einem ersten Stab (26), zwischen Schaltachse (2) und mindestens einem ersten Verbindungsgelenk zu einem Koppelelement, aus mindestens einem zweiten Stab, zwischen dem ersten Verbindungsgelenk und mindestens einem zweiten Verbindungsgelenk zu einem Verbindungselement, und aus einem dritten Stab, zwischen dem zweiten Verbindungsgelenk und einem dritten Verbindungsgelenk zu einem vierten Stab, gebildet werden und daß dieser vierte Stab der Stab der Parallelogrammführung ist, der bei einer Schalt- und/oder Wählbewegung des Schalthebels (1) seine Lage beibehält.

3. Betätigungseinrichtung nach Anspruch 2, dadurch gekennzeichnet, daß der erste Stab (26) vom Schalthebel (1), der zweite Stab vom Koppelelement und der dritte Stab vom Verbindungselement gebildet werden.

4. Betätigungseinrichtung nach einem der Ansprüche 1 bis 3, dadurch gekennzeichnet, daß der vierte Stab an seinem einen Ende um eine Befestigungsachse (9) schwenkbar an einem karosseriefesten Fahrzeugteil angelenkt ist und an seinem anderen Ende um das dritte Verbindungsgelenk in alle Richtungen drehbar am Verbindungselement angebracht ist.

5. Betätigungseinrichtung nach Anspruch 4, dadurch gekennzeichnet, daß die Schaltachse (2) und die Befestigungsachse (9) bei in Wählrichtung nicht ausgelenktem Schalthebel (1) koaxial verlaufen.

6. Betätigungseinrichtung nach einem der Ansprüche 4 bis 5, dadurch gekennzeichnet, daß vom anderen Ende des vierten Stabes durch eine Stützstange (14) die Verbindung zum Kraftfahrzeuggetriebegehäuse (16) hergestellt wird.

7. Betätigungseinrichtung nach einem der Ansprüche 2 bis 6, dadurch gekennzeichnet, daß das Verbindungselement über ein drittes Kugelgelenk (8) am vierten Stab angebracht ist.

8. Betätigungseinrichtung nach Anspruch 7, dadurch gekennzeichnet, daß die Stützstange (14) zum Kraftfahrzeuggetriebegehäuse (16) am vierten Stab schwenkbar angebracht ist und daß die Schwenkachse (13) durch den Mittelpunkt des dritten Kugelgelenks (8) verläuft.

9. Betätigungseinrichtung nach einem der Ansprüche 2 bis 8, dadurch gekennzeichnet, daß das Verbindungselement aus einem Winkelhebel (37) besteht, dessen Ende eines ersten Schenkels (29) mit einer Schaltstange (31) schwenkbeweglich verbunden ist und dessen Ende eines zweiten Schenkels (27) mit dem Koppelelement beweglich so verbunden ist, daß sowohl die Wählbewegung, als auch die Schaltbewegung des Schalthebels (1) über das Koppelelement und den Winkelhebel (37) auf die Schaltstange (31) übertragen wird.

10. Betätigungseinrichtung nach einem der Ansprüche 2 bis 9, dadurch gekennzeichnet, daß der vierte Stab aus einem oberen Halteelementteil (11) und einem unteren Halteelementteil (12) besteht und beide Halteelementteile (11, 12) durch ein Gelenk (10) so verbunden sind, daß sie um eine Halteelementlängsachse gegeneinander verdrehbar sind.

11. Betätigungseinrichtung nach einem der Ansprüche 2 bis 10, dadurch gekennzeichnet, daß das Koppelelement aus zwei Koppelstangen (20, 21) besteht, die mit dem Schalthebel (1) und dem Verbindungselement ein Viergelenkgetriebe in einer Ebene (25) senkrecht zur Schaltebene (28) bilden, wobei mindestens zwei Glieder des Viergelenkgetriebes, der Schalthebel (1) und das Verbindungselement, parallel zueinander geführt werden.

## Claims

1. A means for actuating a vehicle gear unit, comprising a shift lever (1) which, for the purpose of changing between transmission ratios, is movably attached to a motor vehicle, especially so as to be pivotable in each respective gear-shift channel around an axis (2) substantially in the longitudinal direction of the vehicle and, for the purpose of selecting between different gear-shift channels, is pivotable in at least one selector channel around an axis (4) substantially in the transverse direction of the vehicle and is connected by a motion transmission unit for at least one control shaft (34) of the vehicle gear unit, wherein a gear-unit casing (16) is pivoted to the motion transmission unit, characterised in that the gear-shift lever (1) is mounted on a part of the vehicle fastened to the body and the motion-transmitting unit, in projection on to a gear-shift plane (28), comprises at least one parallelogram guide made up of four rods, one rod being permanently connected to the gear-shift lever (1), and when the lever (1) moves for the purpose of gear-shifting and/or selecting, three rods change position and one rod stays in position, one end of the said rod being fastened to a part of the vehicle fixed to the body so as to be pivotable in the gear-shift plane (28) whereas its other end is fastened to the gear casing (16) with at least sufficient degrees of freedom to enable the gear casing (16) to make any movement in space without recoil in the motion-transmitting unit, wherein the rod firmly connected to the gear-shift lever (1) remains in position and the other three rods change position.

2. An actuating means according to claim 1, characterised in that the three rods of the parallelogram guide which change position during a gear-shifting and/or selecting motion of the gear-shift lever (1), in projection on to the switching plane (28), are made up of a first rod (26) between the gear-shift axis (2) and at least one first connecting joint to a coupling element, at least one second rod between the first connecting joint and at least one second connecting joint to a connecting element, and a third rod between the second connecting joint and a third connecting joint to a fourth rod, and the said fourth rod is that rod of the parallelogram guide which remains in position during a gear-shifting and/or selecting movement of the shift lever (1).

3. An actuating means according to claim 2, characterised in that the first rod (26) is the shift lever (1), the second rod is the coupling element and the third rod is the connecting element.

4. An actuating means according to any of claims 1 to 3, characterised in that one end of the fourth rod is connected to a part of the vehicle fixed to the body so as to be pivotable around a fastening axis (9) whereas its other end is attached to the connecting element so as to be rotatable around the third connecting joint in all directions.

5. An actuating means according to claim 4, characterised in that the gear-shift axis (2) and the fastening axis (9) are coaxial when the shift lever (1) is not moved out in the selecting direction.

6. An actuating means according to claim 4 or 5, characterised in that the connection to the gear casing (16) is made from the other end of the fourth rod via a supporting bar (14).

7. An actuating means according to any of claims 2 to 6, characterised in that the connecting element is connected to the fourth rod via a third ball joint (8).

8. An actuating means according to claim 7, characterised in that the supporting bar (14) to the gear casing (16) is pivotably mounted on the fourth rod and the pivoting axis (13) extends through the centre point of the third ball joint (8).

9. An actuating means according to any of claims 2 to 8, characterised in that the connecting element comprises an angle lever (37) having a first arm (29) ending a pivotable connection to a gear-shift bar (31) whereas the end of a second arm (27) is movably connected to the coupling element so that both the selecting movement and the switching movement of the shift lever (1) are transmitted via the coupling element and the angle lever (37) to the gear shift bar (31).

10. An actuating means according to any of claims 2 to 9, characterised in that the fourth rod comprises an upper retaining-element part (11) and a lower retaining-element part (12) and the two parts (11, 12) are connected by a joint (10) so that they are rotatable relative to one another along a longitudinal axis of the retaining element.

11. An actuating means according to any of claims 2 to 10, characterised in that the coupling element comprises two coupling bars (20, 21) which, together with the gear shift lever (1) and the connecting element, form a four-bar linkage in a plane (25) at right angles to the gear shift plane (28), at least two elements of the four-bar linkage, i.e. the gear shift lever (1) and the connecting element, being guided parallel to one another.

## Revendications

1. Installation d'actionnement d'une boîte de vitesses de véhicule automobile comportant un levier de changement de vitesse (1) installé de manière mobile dans le véhicule pour commuter entre les différents rapports de vitesses, notamment dans un chemin de commutation autour d'un axe de commutation (2) essentiellement par pivotement dans la direction longitudinale du véhicule et pour sélectionner entre les différents chemins de commutation dans au moins un chemin de sélection, autour d'un axe de sélection (4), principalement pivotant dans la direction transversale à celle du véhicule, et en étant relié par une chaîne cinématique à au moins un axe de commande (34) de la boîte de vitesses du véhicule, le carter (16) de la boîte de vitesses du véhicule étant articulé à la chaîne cinématique,
caractérisée en ce que
le levier de changement de vitesse (1) est installé sur une partie du véhicule solidaire de la carrosserie et la chaîne cinématique se compose en projection dans un plan de commutation (28), d'au moins un parallélogramme de guidage formé de quatre tiges, une tige étant reliée solidairement au levier de vitesse (1) et lors d'un mouvement de commutation et/ou de sélection du levier de changement de vitesse (1), trois tiges changent de position et une tige conserve sa position, celle-ci étant reliée par une extrémité, dans le plan de commutation (28), de manière mobile en pivotement sur une partie du véhicule solidaire de la carrosserie et son autre extrémité étant reliée de manière mobile au carter (16) de la boîte de vitesses avec au moins autant de degrés de liberté pour que chaque mouvement dans l'espace du carter (16) de la boîte de vitesses soit possible sans induire de réaction dans la chaîne cinématique,
la tige reliée solidairement au levier de commutation (1) conservant sa position, alors que les trois autres tiges changent de position.

2. Installation d'actionnement selon la revendication 1,
caractérisée en ce que
les trois tiges du parallélogramme de guidage qui changent de place lors des mouvements de commutation et/ou de sélection exécutés par le levier de vitesse (1), sont formées dans une projection dans le plan de commutation (28), par une première tige (26) entre l'axe de commutation (2) et au moins une première articulation de liaison vers un élément de couplage, par au moins une seconde tige entre la première articulation de liaison et au moins une seconde articulation de liaison vers un élément de liaison, et par une troisième tige entre la seconde articulation de liaison et une troisième articulation de liaison vers une quatrième tige, et
cette quatrième tige est la tige du parallélogramme de guidage conservant sa place au cours des mouvements de commutation et/ou de sélection exécutés par le levier de vitesse (1).

3. Installation d'actionnement selon la revendication 2,
caractérisée en ce que
la première tige (26) est formée par le levier de vitesse (1), la seconde tige est formée par un élément de couplage et la troisième tige est formée par un élément de liaison.

4. Installation d'actionnement selon l'une des revendications 1 à 3,
caractérisée en ce que
la quatrième tige peut pivoter au niveau d'une de ses extrémités autour d'un axe de fixation (9) en étant articulée sur une partie du véhicule solidaire de la carrosserie, et peut tourner autour de la troisième articulation de liaison dans toutes les directions, avec son autre extrémité reliée sur l'élément de liaison.

5. Installation d'actionnement selon la revendication 4,
caractérisée en ce que
l'axe de commutation (2) et l'axe de fixation (9) sont coaxiaux lorsque le levier de vitesse (1) n'est pas déplacé dans la direction de sélection.

6. Installation d'actionnement selon l'une des revendications 4 à 5,
caractérisée en ce que
la liaison avec le carter (16) de la boîte de vitesses du véhicule est réalisée à partir de l'autre extrémité de la quatrième tige par une bielle d'appui (14).

7. Installation d'actionnement selon l'une des revendications 2 à 6,
caractérisée en ce que
l'élément de liaison est relié à la quatrième tige par une troisième articulation à rotule (8).

8. Installation d'actionnement selon la revendication 7,
caractérisée en ce que
la bielle d'appui (14) au carter (16) de la boîte de vitesses est montée de manière pivotante sur la quatrième tige, et l'axe de pivotement (13) passe par le centre de la troisième articulation à rotule (8).

9. Installation d'actionnement selon l'une des revendications 2 à 8,
caractérisée en ce que
l'élément de liaison est formé d'un levier coudé (37) dont l'extrémité d'une première branche (29) est reliée de manière mobile en pivotement à une bielle de commutation (31) et dont l'extrémité d'une seconde branche (27) est reliée de manière mobile à l'élément de couplage, de façon telle qu'à la fois le mouvement de sélection et le mouvement de commutation du levier de vitesse (1) sont transmis à la bielle de commutation (31) par l'élément de couplage et le levier coudé (37) .

10. Installation d'actionnement selon l'une des revendications 2 à 9,
caractérisée en ce que
la quatrième tige est formée d'une attache supérieure (11) et d'une attache inférieure (12) et les deux attaches (11, 12) sont reliées par une articulation (10) pour pouvoir tourner l'une par rapport à l'autre autour d'un axe longitudinal des attaches.

11. Installation d'actionnement selon l'une des revendications 2 à 10,
caractérisée en ce que
l'élément de couplage est formé par deux tiges de couplage (20, 21) constituant, avec le levier de vitesse (1) et l'élément de liaison, une transmission à quatre articulations dans un plan (25) perpendiculaire au plan de commutation (28), et au moins deux éléments de la transmission à quatre articulations, à savoir le levier de vitesse (1) et l'élément de liaison sont guidés parallèlement l'un à l'autre.
